# EUROPEAN PATENT APPLICATION

(11) **EP 4 734 384 A1**
(43) Date of publication of application: **29.04.2026**
(21) Application number: 25210411.2
(22) Date of filing: 22.10.2025
(51) Int. Cl.: H04B 7/024, H04B 7/06

(54) **PREAMBLE SIGNALING FOR MULTI ACCESS POINT COORDINATED BEAMFORMING USING ERROR CORRECTION CODING SUBFIELDS**

(30) Priority: 23.10.2024 US 202463710862 P; 29.04.2025 US 202519193704
(71) Applicant: Avago Technologies International Sales Pte. Limited, Singapore 768923 (SG)
(72) Inventor: Moelker, Dignus-Jan, Irvine, 92618 (US); Puducheri Sundaravaradhan, Srinath, Irvine, 92618 (US); Porat, Ron, Irvine, 92618 (US)
(74) Representative: Dilg, Haeusler, Schindelmann Patentanwaltsgesellschaft mbH

(57) **Abstract**

At least one aspect of the technical solutions is directed to a system. The system can include a first access point configured to generate a preamble for a network packet of a wireless local area network (WLAN). The first AP can be configured to include, into the common field of the preamble, one or more basic service sets (BSS) colors associated with the first AP and the second AP. The first AP can be configured to include, into a subfield of the user field for indicating error correction coding, an indication of association of the client device with the first AP or the second AP based on the one or more BSS colors. The first AP can be configured to transmit the network packet to be processed by the client device for CBF communication of the network packet according to the one or more BSS colors and the indication.

## Description

### FIELD OF THE DISCLOSURE

This disclosure generally relates to systems and methods for preamble signaling in wireless communication between access points and wireless communication devices, including, without limitation communication reducing interference to unintended communication devices using preamble signaling.

### BACKGROUND

Access points (APs), such as Wi-Fi routers, can facilitate wireless communication to any number of client wireless communication devices, also referred to as client devices, stations or STAs. These client devices can include smartphones, tablets, computers that can be within the wireless communication range of the APs. Sometimes, client devices can experience interferences that can be caused by multiple APs (e.g., within the same or a different wireless communication network) transmitting data to one or more client devices or STAs. Such interferences can be exacerbated when network density is increased and transmission opportunities are reduced.

### SUMMARY OF THE DISCLOSURE

The technical solutions of this disclosure are directed to systems and methods for generating network packet preambles that signal multi-AP coordinated beamforming (CBF) using error correction coding subfields. When multiple APs simultaneously transmit network packets to client devices or STAs associated with at least one of the multiple APs, the payloads of these network packets may be intended to different client devices in the group. As these preambles of these network packets are to be processed by each of the client devices, the preambles may not be beamformed as they carry information for any of the client devices. In such instances, it may be challenging for the client devices receiving the network packet preambles to efficiently and reliably decode the preambles to determine which network packet payloads are intended for which client device. This challenge can be exacerbated by the presence of overlapping BSS colors of different APs and the desire for precise and reliable synchronization among the APs. Consequently, it would be helpful to provide a technique to signal the association of user fields associated with the client devices with the specific APs and BSS colors to allow these client devices to reliably interpret the preambles and accordingly configure their CBF communication.

The technical solution of this disclosure overcome these challenges by utilizing error correction coding subfields within the user fields of the network packet preambles. Specifically, the system generates a preamble that includes a common field and a plurality of user fields. The common field can indicate one or more BSS colors associated with the participating APs, while the user fields can include spatial configuration and other CBF communication data to be used by the received client devices for CBF configurations. As the error correction coding for CBF communications is limited a particular error correction option, the technical solutions can capitalize on this redundancy to utilize the error correction coding subfield of the user fields for indicating association of each of the client devices with their respective AP or its BSS color. In doing so, the system allows for the recipient client devices to accurately decode the preambles and determine the intended spatial streams, thereby improving the reliability and efficiency of the CBF communications and allowing for better synchronization and coordination among multiple APs and their associated client devices.

At least one aspect of the technical solutions is directed to a system. The system can include a first access point configured to generate a preamble for a network packet of a wireless local area network (WLAN). The preamble can include a common field and a user field associated with a client device of a plurality of client devices of the first AP and a second AP. The first AP can be configured to include, into the common field of the preamble, one or more basic service sets (BSS) colors associated with the first AP and the second AP. The first AP and the second AP can be configured to participate in coordinated beamforming (CBF) communication of the network packet. The first AP can be configured to include, into a subfield of the user field for indicating error correction coding, an indication of association of the user field associated with the client device with the first AP or the second AP based on the one or more BSS colors. The first AP can be configured to transmit, to the client device, the network packet to be processed by the client device for CBF communication of the network packet according to the one or more BSS colors and the indication.

The first AP and the second AP can be configured to simultaneously transmit the preamble to the plurality of client devices comprising the client device. The indication from the subfield can be configured for use by the client device to determine whether the network packet of the preamble is intended for the client device. The one or more BSS colors include a first BSS color associated with the first AP and a second BSS color associated with the second AP. The subfield of the user field for indicating error correction coding can be used for indicating error correction coding in non-CBF multiple user multiple input and multiple output (MUMIMO) communication The indication can be configured to cause the client device to determine whether the user field associated with the at least one of client device or a second client device of the plurality of client devices is associated with the first AP based on the first BSS color or the second AP based on the second BSS color.

The indication can be configured to cause the client device to process the network packet according to the CBF communication in response to determining that the network packet is intended for the client device based on the indication. the one or more BSS colors comprise a single BSS color corresponding to the first AP and the second AP. The single BSS color is associated with an ordering of the first AP and second AP according to a first AP position and a second AP position, and the indication in the user field is configured to cause the client device to determine whether the user field is associated with the first AP position or the second AP position responsive to the single BSS color. The preamble can indicate a CBF resource unit (RU) size, wherein the CBF RU size is configured to indicate use of a low-density parity check (LDPC) error correction coding as the error correction coding for the CBF RU communication.

The common field further comprises a second indication indicative of a number of user fields corresponding to a number of the plurality of client devices comprising the client device. The first AP can be configured to negotiate with the second AP, prior to the generation of the preamble, ordering of the first AP and the second AP in the CBF communication. The negotiation between the first AP and the second AP includes establishing an identifier for the first AP or a first BSS color of the one or more BSS colors for the first AP and an identifier for the second AP or a second BSS color of the one or more BSS colors for the second AP.

The preamble can indicate a CBF Resource Unit (RU) size limitation. The CBF RU size limitation can be configured to indicate use of a Low-Density Parity Check (LDPC) coding for the CBF communication. The subfield of the user field includes a single bit signal to distinguish between the first AP or the second AP. The common field can be configured to the client device a number of user fields associated with a CBF Resource Unit (RU). The number of user fields is dependent on a size of the RU determined by the first AP.

At least one aspect of the technical solutions is directed to a method. The method can include generating, by one or more processors of a first access point (AP) coupled with memory, a preamble for a network packet of a wireless local area network (WLAN). The preamble comprising a common field and a user field associated with a client device of a plurality of client devices of the first AP and a second AP. The method can include including, by the one or more processors, into the common field of the preamble, one or more basic service sets (BSS) colors associated with the first AP and the second AP. The first AP and the second AP configured to participate in coordinated beamforming (CBF) communication of the network packet. The method can comprise including, by the one or more processors, into a subfield of the user field for indicating error correction coding, an indication of association of the user field associated with the client device with the first AP or the second AP based on the one or more BSS colors. The method can include transmitting, by the one or more processors to the client device, the network packet to be processed by the client device for CBF communication of the network packet according to the one or more BSS colors and the indication.

At least one aspect of the technical solutions is directed to a computer readable medium storing instructions that when executed by one or more processors of a first access point (AP) cause the one or more processors of the first AP to generate a preamble for a network packet of a wireless local area network (WLAN). The preamble can include a common field and a user field associated with a client device of a plurality of client devices of the first AP and a second AP. The first AP can include, into the common field of the preamble, one or more basic service sets (BSS) colors associated with the first AP and the second AP. The first AP and the second AP can participate in coordinated beamforming (CBF) communication of the network packet. The first AP can include, into a subfield of the user field for indicating error correction coding, an indication of association of the user field associated with the client device with the first AP or the second AP based on the one or more BSS colors. The first AP can transmit, to the client device, the network packet to be processed by the client device for CBF communication of the network packet according to the one or more BSS colors and the indication.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points in communication with one or more devices or stations, according to some embodiments.
FIGs. 1B and 1C are block diagrams depicting computing devices useful in connection with the methods and systems described herein, according to some embodiments.
FIG. 2 illustrates an example system of coordinated partial rank nulling in a multiple AP and multiple STA environment, according to some embodiments.
FIG. 3 is an example plot of a signal-space of a STA transmission in the context of a single AP partial-rank nulling.
FIG. 4 is an example plot of two signal-spaces two STA transmissions in the context of 2 AP coordinated partial-rank nulling.
FIG. 5 is an example block diagram of a system for preamble signaling for multi-AP CBF communications via error correction coding subfield of the user fields of the preamble of a network packet.
FIG. 6 is an example flow diagram of a method for preamble signaling for multi-AP CBF communications via error correction coding subfield of the user fields of the preamble of a network packet.

The details of various embodiments of the methods and systems are set forth in the accompanying drawings and the description below.

### DETAILED DESCRIPTION

The following IEEE standard(s), including any draft versions of such standard(s), are hereby incorporated herein by reference in their entirety and are made part of the present disclosure for all purposes: Wi-Fi Alliance standards and IEEE 802.11 standards including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} draft version D3.0 standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes preamble signaling for multi-AP CBF via error correction coding subfields.

### A. Computing and Network Environment

Prior to discussing specific embodiments of the present solution, it can be helpful to describe aspects of the operating environment as well as associated system components (e.g., hardware elements) in connection with the methods and systems described herein.

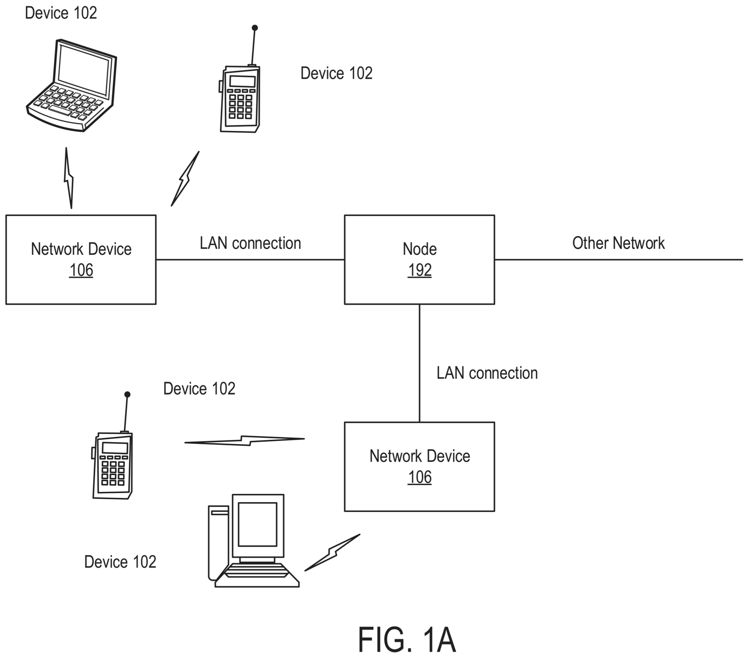

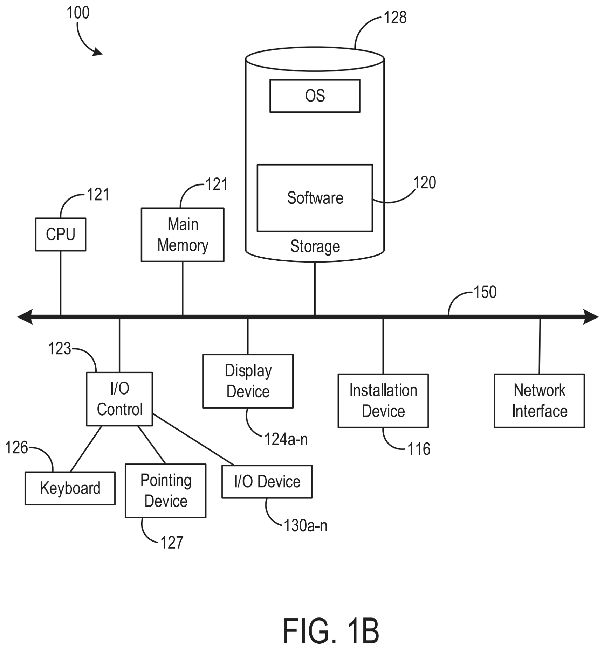

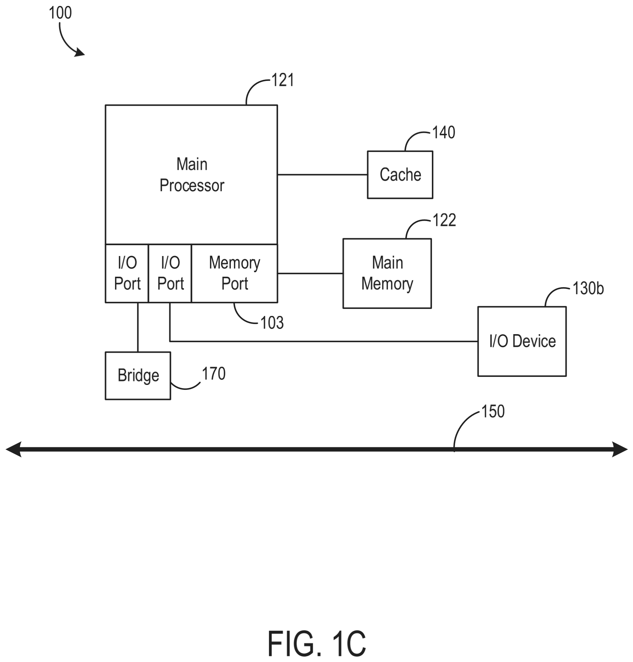

Referring to FIG. 1A, an embodiment of a network environment is depicted. In brief overview, the network environment includes a wireless communication system that includes one or more access points (APs) or network devices 205, one or more stations, also referred to as STAs or wireless communication devices 240 and a network hardware component or network hardware 192. The wireless communication devices or STAs 240 can for example include laptop computers, tablets, personal computers, and/or cellular telephone devices. The details of an embodiment of each station or wireless communication device 240 and AP or network device 205, such as their internal hardware and software configurations, can be described in greater detail with reference to FIGS. 1B and 1C. The network environment can be an ad hoc network environment, an infrastructure wireless network environment, a subnet environment, etc. in one embodiment. The network devices 205 or APs can be operably coupled to the network hardware 192 via local area network connections. Network devices 205 or APs can include, for example, Wi-Fi devices providing WLANs, or 5G base stations for providing cellular networks. The network hardware 192, which can include a router, gateway, switch, bridge, modem, system controller, appliance, etc., can provide a local area network connection for the communication system. Each of the network devices 205 or APs can have an associated antenna or an antenna array to communicate with the wireless communication devices in its area. The wireless communication devices 240 can register with a particular network device 205 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 240 can be mobile or relatively static with respect to network device 205 or AP.

In some embodiments, a network device 205 or AP includes a device or module (including a combination of hardware and software) that allows wireless communication devices 240 to connect to a wired network using wireless fidelity (Wi-Fi), or other standards. A network device 205 or AP can sometimes be referred to as a wireless access point (WAP). A network device 205 or AP can be implemented (e.g., configured, designed and/or built) for operating in a wireless local area network (WLAN). A network device 205 or AP can connect to a router (e.g., via a wired network) as a standalone device in some embodiments. In other embodiments, network device 205 or AP can be a component of a router. Network device 205 or AP can provide multiple devices access to a network. Network device 205 or AP can, for example, connect to a wired Ethernet connection and provide wireless connections using radio frequency links for other devices 240 to utilize that wired connection. A network device 205 or AP can be implemented to support a standard for sending and receiving data using one or more radio frequencies. Those standards, and the frequencies they use can be defined by the IEEE (e.g., IEEE 802.11 standards). A network device 205 or AP can be configured and/or used to support public Internet hotspots, and/or on a network to extend the network's Wi-Fi signal range.

In some embodiments, the access points or network devices 205 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 240 can include a built-in radio and/or is coupled to a radio. Such wireless communication devices 240 and /or access points or network devices 205 can operate in accordance with the various aspects of the disclosure as presented herein to enhance performance, reduce costs and/or size, and/or enhance broadband applications. Each wireless communication device 240 can have the capacity to function as a client node seeking access to resources (e.g., data, and connection to networked nodes such as servers) via one or more access points or network devices 205.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 240 and access point(s) or network devices 205 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 240 or network device 205. As shown in FIGS. 1B and 1C, each computing device 100 includes a processor 121 (e.g., central processing unit), and a main memory unit 122. As shown in FIG. 1B, a computing device 100 can include a storage device 128 (e.g., non-transitory computer readable medium), an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to, and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 (e.g., non-transitory computer readable medium) can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. Computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

When an APs transmits data to a particular intended recipient STA within its own basic service set (BSS), other STAs within the same, or a neighboring BSSs (e.g., other WLANs) can be within the range of the transmitting AP and experience interference. Interference can include any undesired disruption or degradation of a signal, communication, or system caused by the presence of an external signal, noise, or other factors that interfere with the intended transmission or reception of information. Interference can include unwanted signal disruption caused by transmissions from one access point (AP) affecting the communication between another AP and its associated stations (STAs), which CBF can mitigate by adjusting transmission patterns to minimize signal overlap with the unintended STA recipients. For instance, when transmissions destined for different STAs simultaneously occur on the same channels, interferences caused by the transmissions can be difficult to resolve as the information from one or more of the transmissions may be unknown and a relationship between the transmissions may be unknown. Such interferences can cause latencies, delays or dropped network packets, increase processing power thereby increasing energy consumption, reduced optimization of beamforming networks, making data transmissions within such networks more difficult, adversely affecting user experience.

The technical solutions of the present disclosure overcome these challenges by facilitating a multi-AP coordinated beamforming (CBF) per transmission opportunity (TXOP) frame sequence. The CBF can include any technique or approach in which multiple APs collaboratively adjust their beamforming patterns to deliver their signals or transmissions to the intended stations while minimizing or canceling interference from such signals or transmissions at unintended stations. For example, the APs from different BSSs (e.g., WLANs) can use CBF TXOP frame sequences to configure their transmissions to be sent along vectors at which interferences from those APs are minimized at unintended recipient STAs, clients, or user devices. The technical solutions can include client devices (e.g., STAs) receiving data streams or vectors from the APs of their respective networks. A network, such as a WLAN of a particular AP, can include one or more basic service sets (BSS) having an AP and one or more STAs configured for wireless communication via the same AP, such as by being configured to the local WLAN of the AP. As APs may transmit any number of data streams to any number of STAs within their BSS, there can be synchronization of the APs when initiating the data streams causing phase misalignment reducing the beamforming efficiency. The technical solutions of the present disclosure can utilize various messages to convey all information (e.g., preamble contents) associated with the CBF PPDU transmission to respective STAs of each AP. In doing so, the technical solutions of the present solution allow multiple APs to communicate at the same time and frequency (e.g., simultaneous transmissions on the same channel), while avoiding interferences, thereby increasing throughput of the transmissions, decreasing latency and minimizing the spectrum use to avoid interference.

Technical solutions of the present disclosure can include systems and methods of multi-AP CBF TXOP frame sequences. The system and method can use nulling to initially reduce interference between the APs and STAs. Nulling can include one of the candidate features being considered for the next-generation Wi-Fi standard (UHR, 11bn). Nulling can include any technique in which an AP minimizes interfaces experienced by a STA by reducing the strength or power of unwanted signals from other sources. Nulling can include a technique in which a system can combine a signal with another signal in order to create a null (e.g., cancel out the original signal. Nulling can be utilized or included to minimize an AP interference seen by a STA due to the AP's transmissions to other STAs.

The CBF TXOP can be a time interval or a time window to provide at least one AP access to transmit data uninterrupted. The CBF TXOP duration can be specified by the physical layer (PHY) or medium access control (MAC) layer parameters. By exploiting the CBF TXOP, the APs can minimize (e.g., reduce below an acceptable threshold) synchronization and timing issues. For example, the CBF TXOP frame sequences can include techniques to minimize interference by improving on the synchronization of CBF PPDU transmissions. For instance, if an AP attempts to transmit a CBF PPDU, the AP can transmit a message to other APs indicating the information (e.g., MCS/Nss per STA, duration, preamble content, etc.) to align the phase of each AP prior to the CBF PPDU transmission. The present solution can provide a mechanism or a process to coordinate each AP to minimize interference at the STA while improving on the timing of the CBF PPDU transmission at each AP.

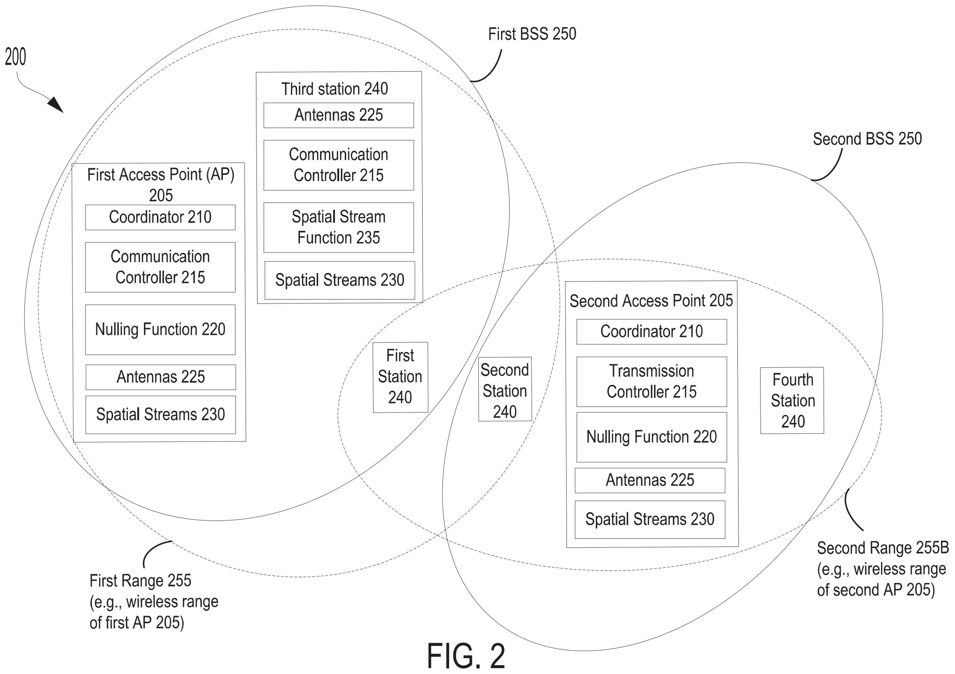

Referring now to FIG. 2, an example of a system 200 for implementing a coordinated nulling with multi-AP transmissions is illustrated. System 200 can include one or more access points (APs) 205 (e.g., Wi-Fi routers) providing transmissions to stations or STAs 240 within their BSSs 250. APs 205 can also have wireless transmission ranges 255 that can include STAs 240 outside of their BSS (e.g., STAs not configured to the WLANs of the respective APs, but still capable of receiving transmissions or interferences from those APs).

FIG. 2 can include a first AP 205 having a first BSS 250 including a first station 240 and a second station 240, as well as a second AP 205 having a second BSS 250 including a second station 240 and a fourth station 240. Each of the first and second APs 205 can include one or more coordinators 210, communication controllers 215, nulling functions 220, antennas 225 and spatial streams 230. Each of the STAs 240 (e.g., first, second, third and fourth stations 240 in system 200) can include one or more antennas 225, communication controllers 215, spatial stream functions 235 and spatial streams 230. In addition to the STAs 240 within their own BSSs 250, each of the APs 205 can also have a wireless signal range 255 which can cover or include the STAs 240 of their own BSS 250, but also STAs 240 that are outside of their BSS 250. For example, in addition to the first and third STAs 240, the first range 255 of the first AP 205 can include the second STA 240 (e.g., from the BSS of the second AP 205). Similarly, in addition to the second and fourth STAs 240, the second AP 205 can have a second signal range 255 that can include the first STA 240 (e.g., from the BSS of the first AP 205)

FIG. 2 can illustrate an environment in which APs 205 can coordinate their transmissions according to their prior-negotiated and configured partial-rank nulling. For instance, system 200 can be used to provide single-AP partial-rank nulling (e.g., partially nulling interferences to non-recipient STAs within the BSS of the transmitting AP) and multi-AP partial-rank nulling (e.g., partially nulling interferences to non-recipient STAs within the same or a different BSS with respect to the transmitting AP).

AP 205 can include any combination of hardware and software that allows wireless communication devices, such as STAs 240, to connect wirelessly to a wired network or world wide web or internet. AP 205 can include any combination of hardware and software for facilitating wireless communication within a WLAN of the AP for any STAs 240 that are included in its BSS 250. APs 205 can include one or more communication devices, such as Wi-Fi routers, switches, Bluetooth hubs, cellular network base stations and can utilize any wireless communication protocols or standards, such as 802.11 for wireless communication.

APs 205 and STAs 240 can be configured for wireless communication in wireless communication networks, such as a LAN, WAN or a cellular network. For example, each AP 205 can include, be associated with, be coupled with, provide or facilitate a communication network, such as WLAN of a Wi-Fi for any clients or stations 240 of its own basic service set (BSS).

BSS 250 is a term to identify a collection of stations (e.g., devices) that are associated with the same wireless access point within a WLAN. For instance, BSS can identify a set or collection of one or more stations and/or one or more APs that communicate together within a wireless network. BSS 250 can include one or more APs and client devices (e.g., STAs 240) coupled to the AP within a particular coverage area, such as a range 255. BSS 250 can provide an infrastructure for the AP 205 to provide network communication to STAs 240 within its frequency coverage area. Within a BSS 250, an AP 205 can manage data distribution to various connected devices (e.g., STAs 240), facilitate implementation of security protocols or functions and roaming as STAs 240 may move in and out of its coverage area (e.g., range 255). Range 255 can include an area to which signals from the AP 205 can reach to recipient STAs 240. Range 255 can include STAs 240 that are within the BSS 250 of the given AP 205 or STAs 240 that are a part of BSS 250 of another AP 205, such as for example, first STA 240 which is a part of the first BSS 250 of the first AP 205, but also within a second range 255 of the second AP 205 servicing second and fourth STAs 240 of the second BSS 250.

Coordinator 210 can include any combination of hardware and software for coordinating communications between APs 205 and/or STAs 240. Coordinator 210 can include functionality (e.g., applications, computer code or programs) facilitating coordination of communication (e.g., transmissions) between APs 205 and STAs 240 or among APs 205. Coordinator 210 can include functionality for implementing a coordination phase to identify STAs 240 for which interference needs to be wholly or partially nulled and exchanging STA 240 information between APs 205. Coordinator 210 can include functionality for coordinating timing and frequencies, such as exchanging timing and frequencies information (e.g., communication bands or channels) between APs 205. Coordinator 210 can generate, facilitate, implement and apply settings or configurations to APs 205 and/or STAs 240 to facilitate coordinated partial-rank nulling.

Coordinator 210 can include a precoder functionality, such as a precoder algorithm for computing beamforming vectors for each STA 240 to achieve partial-rank nulling. Precoder can include a functionality for computing directions or vectors for beamforming transmissions to STAs 240. Precoder can include a functionality for utilizing information or data on directions or vectors at the STAs 240 at which interference is minimized or reduced below a threshold for acceptable level of interference (e.g., partial-rank nulling is achieved) to determine directions or vectors for beamforming transmissions to perform partial-rank nulling at such STAs 240.

Coordinator 210 can include the functionality to perform channel-sounding to STAs 240. For example, coordinator 210 can facilitate, instruct, or request each STA to measure one or more MIMO channels for each sounding AP and provide measurements back to the coordinator 210. The relative phase-offsets across receive antennas 225 for the STA 240 can be maintained at constant values when measuring channels for different APs 205. Coordinator 210 can exchange with the STAs 240 estimates of the MIMO channel for a sounding AP (e.g., via a compressed beamforming report format (CBR), as provided in 802.11, or in Cartesian form). Coordinator 210 can exchange information for interfering APs 205 (e.g., APs 205 from external BSSs 250), such as when STAs 240 provide linear transformation of the MIMO channel from that particular interfering AP 205. The linear transformation can be determined using previously measured MIMO channel between the STA and its own AP 205 (e.g., AP 205 of STA's BSS 250). For example, linear transformation of the MIMO channel could represent projection onto one or more eigen-models of the MIMO channel measured between the STA and the AP 205 of STA's own BSS. For example, coordinator 210 can exchange (e.g., receive) set of directions in which an AP 205 is to minimize interference if the STA is receiving a particular number of intended spatial streams from its own AP 205 (e.g., AP 205 from STA's own BSS 250).

Coordinator 210 can include the functionality for facilitating or performing channel-sounding to STAs 240. Channel sounding can include transmitting signals and receiving, in response, characteristics, such as signal strength, delay and phase, and then using such received characteristics determine the quality of the communication channels. Coordinator 210 can transmit (e.g., individually or jointly with APs 205 of other BSSs 250) one or more null-data-packets (NDPs). NDPs can be synchronized in time and/or frequency (e.g., between multiple APs 205 performing simultaneous channel sounding). The number of sounding dimensions in the NDP can include a total number of antennas across the APs. Jointly transmitted NDPs can be preceded by one or more NDP announcement (NDPA) frames. For example, an AP 205 can transmit an NDPA on behalf of all APs 205 performing channel sounding to all the STAs 240 being sounded. For example, each of the APs 205 sends an NDPA sequentially to their own STAs 240. For example, all APs 205 transmit their NDPAs at the same time but separated in frequency (e.g., via OFDMA) with each AP 205 addressing the STAs 240 within its own BSS 250. For example, coordinator 210 can provide or facilitate trigger frames transmitted by the AP 205, based on which all the APs 205 participating in channel sounding can synchronize their carrier frequency offsets (CFOs) and the start time of their coordinated transmissions.

Communication controllers 215 can include any combination of hardware and software for implementing wireless communications between APs 205 and STAs 240. Communication controller 215 can include the functionality for providing and transmitting data (e.g., spatial streams) to the intended STAs 240. Communication controller 215 can transmit messages to STAs 240, such as inquiring about information, data or description of directions or vectors in which interferences are to be minimized at each STA 240. Communication controller 240 can include the functionality for configuring for transmission features of the AP 205 to perform and implement the transmissions of the spatial streams 230 in accordance with partial-rank nulling. For instance, communication controller 215 can configure antennas 225 and any other settings to facilitate or implement transmissions of spatial streams 230 according to the specific directions or vectors (e.g., as determined by the coordinator 210), to implement partial-rank nulling at the specific STAs 240. Communication controller 215 can control, manage and implement the transmissions (e.g., communications) in accordance with the timing and frequency (e.g., selected channels or bands), as well as in directions or vectors in which partial-rank nulling is implemented.

APs 205 and/or STAs 240 can include communication controllers 215 to facilitate wireless communications with each other. Communication controllers 215 can include and/or utilize wireless communication interfaces, such as hardware and software, including transceivers, antennas, RF interfaces, ports and processing devices facilitating communications via standards, such as 802.11a/b/g/n/ac/ax, Bluetooth, Cellular (e.g., 3G, 4G, 5G), Zigbee, Z-Wave, NFC and others. Communication controllers 215 can control receiving and transmission of signals, data, or messages to facilitate or implement the multi-AP transmissions using coordinated partial-rank nulling.

APS 205 can include nulling functions 220 for implementing nulling per coordinated (e.g., agreed upon) communications between the APs 205. Partial-rank nulling can include any technique or action in array signal processing for suppressing interference from signals from specific directions while preserving signals arriving from other directions. For example, partial-rank nulling can include manipulating the array response to create nulls or zeros in the radiation pattern in interference from a particular direction. Nulling function 220 can include any combination of hardware and software for reducing or cancelling unwanted signals or interference at a receiver (e.g., STA 240), such as by adjusting the phase and amplitude of incoming signals. Nulling function 220 can include any combination of hardware and software for minimizing or reducing an unwanted signal or an interference (e.g., to below an acceptable threshold level), such as without completely eliminating the interference.

Nulling function 220 can include the functionality to measure interference from a particular AP 205 from various receive vectors or directions with respect to the STA 240. Direction can include any path or course along which the transmission signal is moving, oriented, or pointing (e.g., as a vector), and can be specified by its position relative to a reference point or object, such as an AP and/or STA. Nulling function 220 can identify or use measured signals (e.g., sounding signals) from multiple angles, directions or vectors and identify the angle, direction or vector from, along or at which the interference is the lowest or below an acceptable threshold. Nulling function 220 can include or utilize a precoder, such as residing within coordinator 210, to determine the direction or angle along which the interference is lowest or reduced below a threshold.

APS 205 and stations 240 can include antennas 225. Antennas 225 can include any transmission or receive antennas. Antennas 225 can include, or be coupled with, communication chains and/or transceivers implementing the communication, including chains of circuitry (e.g., amplifiers, filters, analog to digital and/or digital to analog converters, processors, signal combiners and other circuitry to facilitate signal transmission or receipt.

APs 205 and stations 240 can communication spatial streams 230 (e.g., spatial streams M of an AP 205 intended for a particular STA 240, or a total number of spatial streams N transmitted by an AP 205). Spatial stream 230 can include any data stream transmitted or received through a separate antenna in a MIMO wireless communication system. For instance, a spatial stream can be transmitted or received on more than one antenna, and multiple spatial streams may share the same set of antennas. For example, each spatial stream when transmitted over multiple antennas can use a unique beamforming vector, which can be different from the vectors used for other spatial streams transmitted over the same set of antennas. Spatial streams 230 can provide or facilitate improved throughput and reliability by using multiple antennas to create distinct data paths. Spatial streams 230 can be suitable for directional control and transmissions with partial-rank nulling.

System 200 can include or use any number of spatial streams 230, including any independent data streams transmitted simultaneously over multiple antennas in a MIMO (Multiple-Input Multiple-Output) system. System 200 can include STAs 240 that can be configured for communicating a wireless network (e.g., WLAN of a BSS 250) to receive and transmit data. System 200 can allow a STA 240 to receive multiple spatial streams 230 simultaneously via one or more receive antennas 225 (e.g., two receive antennas for each STA 240). Each spatial stream 230 can represent an independent data stream transmitted from an AP 205 that can minimize the interference in a number of dimensions/directions. The number of dimensions or directions in which the partial-rank nulling can reduce the interference can be smaller than the number of spatial streams 230 that a STA 240 can receive. For example, if a STA has two receive antennas 225 (e.g., can receive signals in two dimensions or directions), partial-rank nulling can minimize interference along one dimension or direction as seen by the STA 240.

The number of spatial streams 230 that a STA 240 can support can vary based on the capabilities and the MIMO configuration of the network. For example, if a STA 240 has multiple receive antennas 225 and the network is configured for 2x2 MIMO, then STA 240 can receive two spatial streams 230 simultaneously. Each spatial stream 230 can carry independent data, effectively increasing the data capacity and improving the overall throughput, data rates, increased system capacity, and/or wireless network reliability.

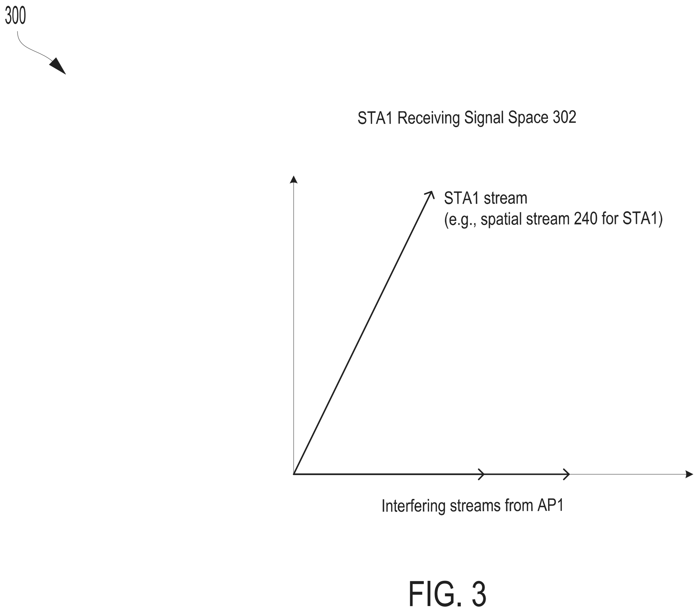

Referring now to FIG. 3, an example of a plot 300 of a signal-space 302 for received transmissions by a STA 240 in an aspect of the technical solution. As shown in plot 300, station 240 (e.g., STA1) having a total of K=2 receive antennas 225 can receive a total number of N=3 spatial data streams 230 transmitted by an AP 205 (AP1). STA1 can be within the BSS 250 of the transmitting AP1 205 and can receive all of 3 spatial data streams 230 transmitted by AP1, even though only one of those spatial data streams 230 are intended for STA1.

For example, AP1 can transmit N=3 spatial streams 230 via a down link (DL) MU-MIMO to multiple STAs 240 within its BSS 250. Of the N=3 total spatial data streams 230 transmitted by AP1, M=1 streams (e.g., a single spatial data stream 230, where M<N) can be intended for STA1. While plot 300 shows STA1 stream (e.g., the stream intended for STA1) directed at an angle away from the X axis, the remaining two spatial data streams 230 (e.g., interfering streams from AP1) are directed along the X-axis. The Y-axis (which is orthogonal or perpendicular to the X-axis) can represent the direction or vector on the signal space 302 of the STA1 along which transmissions are nulled or partially nulled. Accordingly, STA1 stream (being directed at least partially along the Y-axis) can have an interference below a threshold in at least one direction and can therefore be received by the STA1. For example, STA1 stream can be free from interference at least in one direction.

In the example of FIG. 3, receiving station 240, such as the STA1, can have any number of K receive-antennas 225, such that M < K < N, where M corresponds to a total number of data streams intended for the receiving station 240 and N corresponds to a total number of data streams transmitted by the AP 205 to any number of recipients. In plot 300 example, N = 3, M = 1 and K = 2. In such a scenario, for STA1 240 to be able to decode its own M intended spatial-streams 230, AP1 205 can beamform the transmitted spatial-streams such that the signal strength from the interfering streams (e.g., N-M=2 streams aligned with the X-axis) have their signals at the STA1 minimized over a set of M linearly-independent directions as received at STA1 240. M intended streams 230 can be recovered by STA1 240 by projecting them away from the X-axis, as shown by STA1 stream.

AP1 205 can include appropriately constructed long-training fields (LTFs) in its transmissions so that STA1 240 can estimate both i) the directions of its M intended streams, as well as (ii) the M distinct directions in which the interference is minimized. The technical solution can include or provide a framework for a scenario in which any number of APs 205 performing partial-rank nulling towards any number of STAs 240. For instance, when two APs 205 are utilized, prior to implementing coordinated-transmissions, a first AP 205 (e.g., AP1) and a second AP 205 (e.g., AP2) can execute a coordination (e.g., during a coordination phase) in which messages can be exchanged between AP1 and AP2 to identify each receiving STA for which the interference is to be fully or partially nulled. For example, the APs 205 can identify a STA 240 with more receive antennas than its intended spatial streams (e.g., antennas K=2, while received streams N = 10, of which only M=1 is intended for the STA).

Such identified STA can include an interference seen from the OBSS AP to be significant enough to include nulling (e.g., STA can have interference signal strength or power that is above a particular threshold). For example, the threshold can include a level of the background signal noise, or a factor of 2, 3, 4, 5, 10 or more of the level of the background noise. The threshold can be, for example, defined in reference to other signals, such as signal strengths, amplitude or power of received intended streams (e.g., 1/2, 1/3, 1/4, or 1/8 of the intended received spatial stream's signal strength, amplitude or power).

For each STA that is identified to have its interfering streams be partially nulled, the AP1 and AP2 can identify a set of linearly independent receive-directions in which the interference from both APs is to be minimized. Linearly independent receive directions can include distinct and non-correlated paths, directions or channels through which signals can be received by multiple receive antennas 225. AP1 and AP2 can change such a set of directions dynamically from one coordinated transmission to the next depending on: i) other receiving STAs, as well as ii) the number of spatial streams intended for each STA.

Once the set of directions are identified, the AP1 and AP2 can commence coordinated transmission that is synchronized in both time and frequency. For instance, out of a total number N1 spatial streams transmitted from AP1, a subset of M1 spatial streams can be intended for STA1 having a K1 number of receive-antennas. The configuration can include M1 spatial streams intended for STA1 that is less than the number of K1 receive-antennas and which are also less than the total number of N1 spatial streams from the AP1 (e.g., M1 < K1 < N1). Likewise, of the N2 streams transmitted from AP2, M2 streams can be intended to STA2 having K2 receive-antennas can be such that M2 < K2 < N2. In such a configuration, both STA1 and STA2 can be selected, determined or configured to have partial-rank nulling implemented upon them by the AP1 or AP2. AP1 or AP2 can coordinate their data stream transitions in time and frequency, using beamforming to directions at which partial-rank nulling is to be performed to reduce interference and allow simultaneous transmissions.

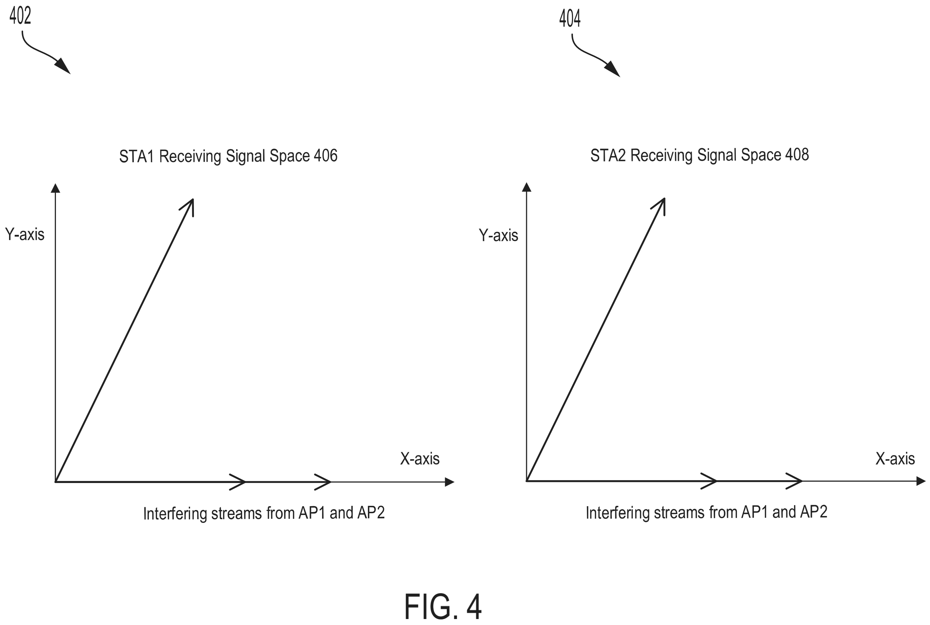

Referring now to FIG. 4, example plots 402 and 404 are illustrated of receiving signal spaces 406 of STA1 and 408 of STA2 which are recipients of transmissions by AP1 and AP2 implementing coordinated partial-rank nulling in a multi-AP transmission example. FIG. 4 can correspond to an instance in which the present technical solutions utilize two APs 205, such as those illustrated in FIG. 2. APs 205 can apply appropriate beamforming vectors to their respective spatial streams 230 to transmit streams at least along the specified directions or vectors as received by the intended STAs, such that the same streams will be partially or fully nulled along the specified directions at the unintended receiving STAs. For example, the beamforming vectors applied to spatial streams can be such that the interference from both AP1 and AP2 is minimized over a set of M1 independent receive-directions at STA1 as pre-agreed during the coordination phase. The M1 intended streams for STA1 can be recovered by projecting the streams in such determined M1 directions. For example, the same can be applied for STA2, with a corresponding set of M2 directions for the STA2. The AP1 and AP2 can include appropriately constructed long-training fields (LTFs) in the coordinated-transmission so that STA1, STA2 can estimate both i) the directions of their respective intended streams, as well as (ii) the directions in which the interference from AP1 and AP2 is minimized.

AP1 and AP2 can each transmit a total number of N = 2 spatial streams 230 of which only M = 1 spatial stream 230 is intended for receipt by the STA 240 of the respective transmitting AP 205's own BSS 250, where each receiving STA 240 includes K =2 receiving antennas 225. For example, for STA1, the remaining one spatial stream from AP1 and both spatial streams from AP2 can produce interference to be partially nulled. As illustrated, a total of 3 spatial streams are partially nulled (e.g., aligned with X-axis or X direction in FIG. 4).

As shown in plot 402, interfering streams 412 from AP1 and 414 and 416 from AP2 are directed along the X direction of STA1 receiving signal space 406, and are eliminated or minimized along the Y direction, while intended stream 410 of AP1 is directed along a different direction (e.g., closer to, or more closely aligned with, the Y direction) and therefore is not eliminated or minimized along the Y-axis or Y direction and received by STA1. For example, Y-axis, also referred to Y direction, can be orthogonal or perpendicular to the X-axis, also referred to as X direction. For example, STA1 receiving signal space allows for intended spatial streams to be received at STA1 when such streams have a component in Y direction that is greater than a threshold. For example, the threshold can up to 5% of the total received signal strength of the intended spatial stream. For example, the threshold can be up to 5%, 10%, 15%, 20%, 30% or greater than 30%, depending on the design.

Similarly, as shown in plot 404, interfering streams 410 and 412 from AP1 and 416 from AP2 are directed along the X direction of STA2 receiving signal space 408, and their signals are also minimized or eliminated along the Y direction, while intended stream 414 from AP2 is directed along a different direction (e.g., closer to, or more closely aligned with, the Y-axis) and therefore is not eliminated or minimized along the Y direction and received by the STA2. In some implementations, AP1 and AP2 can transmit streams 410, 412, 414 and 416 simultaneously in the presence and range of STA1 and STA2 and interferences and non-interferences of the streams can occur at the same time. Accordingly, the AP1 and AP2 can simultaneously and in a coordinated fashion (e.g., at the same time and frequency) transmit spatial streams to their own respective STAs 240, using partial-rank nulling to prevent interferences to non-intended STAs 240.

In one example, as a part of the coordination phase, the APs 205 (e.g., AP1 and AP2) can exchange information on the precoder-algorithm to be used in computing the beamforming vectors for each STA 240 (e.g., STA1 and STA2) to achieve partial-rank nulling. For example, as a part of the coordination phase, the APs 205 can exchange information, data or description of the direction-vectors in which interference is to be minimized at each STA's receiving antennas 225. For example, as a part of the coordination phase, a single AP 205 can compute the beamforming vectors for all the spatial streams and shares these with the other participating APs.

Using the information exchanged in the coordination phase, the receive-directions in which to minimize interference for each STA 240 can be determined or generated based on, or using, policies, such as policies specified in the standard. The choice of the policy can be fixed as a "default" implementation or can be decided based on the capabilities of the APs 205 and/or the STAs 240. For example, a policy can include for a STA receiving M intended spatial-streams from the AP 205 of its own BSS 250, an interfering AP 205 minimizing interference along the M directions at that STA's receiver corresponding to the M strongest eigen-modes of the channel between the STA 240 and its AP 205 (e.g., AP 205 of STA's own BSS 250). For example, a policy can include, for a STA receiving M intended spatial-streams from the AP of STA's own BSS, an interfering AP 205 minimizing interference along the M directions at that STA's receiver that correspond to the M strongest eigen-modes of the channel between the STA 240 and the interfering AP 205.

For example, as a part of the coordination phase, AP1 and AP2 can each perform channel-sounding to STA1 and STA2. Each STA 240 can measure the MIMO channel from each sounding AP 205 and can provide a response including the measurements. The relative phase-offsets across receive antennas for a STA 240 can be maintained at constant values when measuring channels from different APs.

During the coordination phase, different independent variants and their combinations can be implemented. For example, a STA 240 can feed back estimates of the MIMO channel from a sounding AP in a compressed-beamforming report format (CBR), such as the one defined in 802.11. For example, a STA 240 can feed back estimates of the MIMO channel from a sounding AP in Cartesian-form. For example, for an AP 205 from another BSS 250 than the BSS 250 of the STA, (e.g., an interfering AP), STA 240 can feed back a linear transformation of the MIMO channel from that AP 205. The linear transformation can be determined by the previously measured MIMO channel between the STA and its self-BSS AP. For example, linear-transformations could represent projection onto one or more eigen-modes of the MIMO channel measured between the STA 240 and its self-BSS AP 205. For example, for a sounding AP 205, a STA 240 can feed back the preferred set of M directions in which the corresponding AP can minimize interference if the STA 240 is receiving M intended spatial streams from its self-BSS AP 205.

As part of the coordination phase, the APs 205 (e.g., AP1 and AP2) can jointly perform channel-sounding to STAs 240. APs 205 can jointly transmit a null-data-packet (NDP) which can be synchronized in time/frequency. The total number of sounding dimensions in the NDP can equal to the total number of antennas 225 across the APs 205. The jointly transmitted NDP can be preceded by one or more NDP announcement (NDPA) frames. For example, a single AP 205 can transmit an NDPA on behalf of all the APs, to STAs across BSS 250 that are to be sounded. For example, all the APs 205 cam transmit their NDPAs sequentially, with each AP's NDPA addressing the STAs 240 within their own BSS 250. For example, all APs 205 can transmit their NDPAs at the same time, but separated in frequency (e.g., via OFDMA), with each AP 205 addressing the STAs 240 within their own respective BSSs 250. The coordinated transmission can be preceded by a trigger frame transmitted by one of the APs 205. Based on the trigger frame, all the participating APs 205 can synchronize their carrier-frequency offsets (CFO) relative to the AP 205 that transmitted the trigger frame and synchronize the start-time of their coordinated transmissions.

### B. Preamble Signaling for Multi-AP CBF via Error Correction Coding Subfields

In multi-Access Point (AP) coordinated beamforming (CBF) scenarios, simultaneous transmissions from multiple APs to a group of client devices can present significant challenges. As these network packets can include multiple spatial streams, some of which can be intended for specific client devices within the group of client devices. The preambles of these packets, which may not be beamformed, normally carry information for all client devices associated with the participating APs for whom the included spatial streams are intended. The information in the preamble intended for a client device is normally contained in a user field that is addressed to the client device by means of a station ID (STA ID). Station IDs are typically unique to client devices associated with the same AP, but may be shared by two client devices that are associated to different participating APs. This can make it difficult for the client devices to determine efficiently and reliably which spatial streams are intended for them, especially when dealing with overlapping Basic Service Set (BSS) colors, precise association with the corresponding APs and synchronization among the APs and STAs.

To address these challenges, the present disclosure proposes utilizing Low-Density Parity Check (LDPC) as the sole error correction coding option for CBF transmissions, allowing for the error correction coding subfields within the user fields of the preamble to be utilized for clarifying user field association with particular APs. For instance, when a CBF transmission is configured to utilize a Resource Unit (RU) that is specified to not be smaller than RU-484, the system can indirectly impose LDPC coding on the configuration, as it is the only supported coding option for RUs of this size or larger. For instance, when a CBF transmission is configured to utilize a Resource Unit (RU) specified to be smaller than RU-484, the system can impose LDPC as the only coding option for this configuration. In doing so, the error correction coding subfields of the preamble can be utilized to indicate if the particular user field is associated with a particular AP of the plurality of participating APs. For instance, the technical solution can generate a preamble that includes a common field and a plurality of user fields, with the common field signaling the participating APs and their associated BSS colors. For instance, the common field can include two BSS-color fields BSS-color1 and BSS-color2, where each BSS-color field identifies one of the participating APs. For instance, the common field can contain a single BSS-color field that denotes a pre-negotiated ordered pair of BSS-colors (e.g., BSS-color1, BSS-color2) wherein BSS-color1 corresponds to a first AP and BSS-color2 corresponds to a second AP, wherein the first AP and the second AP participate in the CBF transmission. The user fields can include spatial configuration subfields that are combined to form a CBF configuration field, identifying the actual spatial configuration, the association of user fields with specific APs, as well as whether the RU is a CBF RU.

The technical solution can include, for example, repurposing the 1-bit coding subfield in the user fields for the purposes of CBF resource units (Rus). In such configurations, the error correction coding subfield can signal whether the user field is associated with a specific BSS color or AP, based on the common field's signaling. For example, a value of 0 can indicate association with BSS-color1 or the first AP, while a value of 1 can indicate association with BSS-color2 or the second AP. This technique can allow the client devices to accurately decode the preambles and determine the intended spatial streams, ensuring efficient and reliable CBF communication.

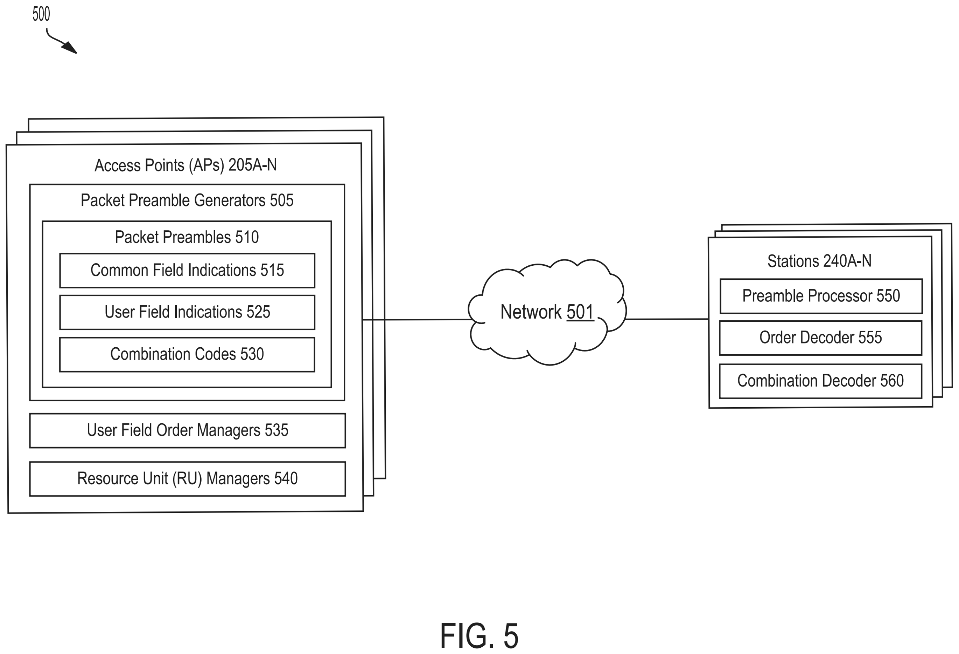

FIG. 5 is an example block diagram of a system 500 for providing preamble signaling for multi-AP CBF via error correction coding subfield of the network packet preamble. Example system 500 can incorporate, utilize or include any features or functionalities of a system 200 or example features 300 and 400, and vice versa. System 500 can include a plurality of APs 205A-N (e.g., APs) that are in wireless communication with a plurality of client devices or stations 240A-N (e.g., STAs) 240 via one or more networks 501. Each AP 205 can include any one or more of packet preamble generators 505, user field order managers 535 and resource unit (RU) managers 540. A packet preamble generator 505 can include, generate, update or manage any number of packet preambles 510 of a network packet that can be destined for one or more STAs 240 such as by including or inserting indications or signals into common fields or user fields of a packet preamble 510. A packet preamble 510 can include any one or more of common field indications 515 (e.g., to be inserted by a packet preamble generator 505 into a common field of a packet preamble 510) or user field indications 525 (e.g., to be inserted by a packet preamble generator 505 into user fields of a packet preamble 510). The packet preamble 510 can include one or more combination codes 530 that can be included or inserted by a packet preamble generator 505 into a common field of the packet preamble 510 (e.g., as a type of a common field indication utilizing a pre-negotiated combination codes for communicating CBF RU and related data).

Across the network 501, the client devices or stations 240A-N can include one or more of preamble processors 550 for processing received packet preambles 510, order decoders 555 for decoding the ordering of user fields in the packet preambles 510, or combination decoders 560 for decoding the combination codes 530. The preamble processors 550, order decoders 55 and combination decoders 560 can be utilized in various configurations of the solution to determine, on behalf of the client devices or STAs 240, the association between the client devices and the APs and any corresponding CBF RU data.

AP 205 can include any combination of hardware and software for providing wireless communication and preamble signaling for multi-AP CBF communications to client devices or stations 240 via one or more networks 501. AP 205 can be configured to generate, manage, and transmit network packets, including the packet preambles 510, to the client devices or STAs 240. The network packet can be or include a CBF Physical Protocol Data Unit (PPDU) or a CBF network transmission. The CBF PPDU can be a sequence of bits that includes a preamble and data fields. The preamble of the CBF PPDU can include transmission vector information to decode the network packet and provide efficient communication between the APs 205 and the STAs 240. The data fields of the CBF PPDU can include a payload and one or more higher layer headers ( e.g., medium access control fields, cyclic redundancy). The preamble of the network packet can include contents of the preamble of the CBF PPDU. The preamble of the network packet can include any sequence of bits that signals the start of the packet and allows the receiving STA 240 to obtain relevant information (such as one or more of MCS, number of spatial streams, position of spatial streams, RU information, coding type) needed to decode the data in the packet. The preamble of a network packet can allow the receiving STA 240 to synchronize its clock with the sender's clock for accurate data interpretation. AP 205 can generate a preamble for a network packet (e.g., packet preamble 510) of a wireless local area network (WLAN) for any number of STAs 240 associated with the first AP 205 or a second AP 205 communicating within the range.

The packet preamble 510 generated by the AP 205 can include a common field and a plurality of user fields associated with a plurality of client devices or STAs 240 of the APs 205 participating in CBF communication (e.g., a first AP 205 and a second AP 205). A common field of a preamble can include a portion of the preamble that includes information shared by all devices in the WLAN (e.g., APs 205 and STAs 240) to facilitate a desired communication and coordination among the devices. The user fields of the preamble can include specific sections of the preamble that include information for particular recipient client devices or STAs 240, such as information for multiple users being serviced in the PPDU.

An AP 205 can include or insert, into the common field of the preamble, one or more common field indications 515, such as indications of basic service sets (BSS) colors associated with the first AP and the second AP. The AP 205 can also include or insert indications into user fields of the packet preamble 510, including indications or signals included or inserted within a subfield for indicating error coding within a user field. These subfield indications can signal for the recipient client devices or STAs 240 associations of the user field with the first AP or the second AP based on the one or more BSS colors. The AP 205 can transmit the network packet to the STA 240 to be processed by the STA 240 for CBF communication of the network packet according to the one or more BSS colors and the indication (e.g., within the subfield for indication of the error correction coding).

Packet preamble generator 505 can include any functionality (e.g., instructions or computer code) for generating, updating, and managing packet preambles 510 of network packets destined for one or more stations 240. The packet preamble generator 505 can generate a preamble for a network packet of a wireless local area network (WLAN). The generated preamble can include a common field and one or more user fields that are associated with a client device (e.g., STA 240) of a plurality of client devices or STAs 240 of any one of the APs 205, such as a first AP 205 or a second AP 205 that may have an overlapping signal range. Packet preamble generator 505 can include any combination of hardware and software for generating a packet preamble 510, such as a physical protocol data unit (PPDU) to be utilized for CBF communication. Packet preamble generator 505 can include the hardware and software for generating a packet preamble 510 that signals for multi-AP CBF communications between the APs 205 and the STAs 240 association of the network packet of the packet preamble 510 and the recipient STA 240.

Packet preamble generator 505 can include or insert indications or signals into common fields or user fields of a packet preamble 510. The packet preamble 510 can include a common field and a plurality of user fields associated with a plurality of STAs 240 associated with at least one of the first AP 205 and a second AP 205. For example, packet preamble generator 505 can insert into the preamble common field a common field indication 515 that corresponds to one or more BSS colors associated with the first AP 205 and the second AP 205. The first AP 205 and the second AP 205 can be configured to participate in CBF communication of the network packet and can utilize the packet preamble 510 to cause the STAs 240 to configure their operations (e.g., at the STA end) for the CBF communication.

The packet preamble generator 505 or the resource unit manager 540 can transmit the preamble (e.g., 510) to a client device or STA 240 of the plurality of client devices. The packet preamble 510 can be transmitted to trigger the client device to process the network packet for CBF communication based on the order or arrangement of the plurality of user fields into subsets of user fields within the packet preamble 510. For example, the AP 205 can transmit the packet preamble 510 to at least a client device 240 of the client devices to configure the recipient client device 240 to participate in the CBF communication of the network packet according to the BSS color and the combination code 530.

The packet preamble generator 505 can include or insert, into a subfield of one or more user fields dedicated, configured or used for indication of error correction coding, an indication of association of the user field with the first AP or the second AP based on the one or more BSS colors. The error correction coding can include any code or one or more values to indicate a particular type of error correction mechanism to be used for detecting or correction erroneous transmissions. For instance, user fields of the preamble can include a subfield to indicate a type of error correction coding to utilize for communication. The packet preamble generator 505 can repurpose, reuse or reconfigure the subfield for error correction coding to instead of error correction coding include an indication or a value to associate the user field intended for a recipient STA 240 with either the first AP 205 or second AP 205. For instance, the indication or value can associate the user field with the AP 205 to which the intended recipient STA 240 is associated. The packet preamble generator 505 can arrange or order the plurality of user fields of the packet preamble 510 into a first subset of user fields associated with a first one of the first AP and the second AP 205 and a second subset of user fields associated with a second one of the first AP and the second AP 205.

The packet preamble generator 505 or the resource unit manager 540 can transmit the preamble (e.g., 510) to a client device or STA 240 of the plurality of client devices. The packet preamble 510 can be transmitted to trigger the client device to process the network packet for CBF communication based on the order of the plurality of user fields within the packet preamble 510. For instance, the packet preamble generator 505 can transmit, to the client device or STA 240, the network packet that includes the preamble. The preamble of the transmitted network packet can include the common field with the common field indication 515 (e.g., a BSS color indication) inserted and one or more user fields with user field indications 525 of association of the user field with either the first AP 205 or the second AP 205 of the plurality of APs 205 within the signal range of the STA 240. Using the common field indications 515, the transmitted preamble can be configured to be processed by the STA 240 for the CBF communication in accordance with the one or more BSS colors and the user field indication 525 for each of the STAs 240.

Packet preamble 510 can include any preamble of a network packet transmitted between one or more APs 205 and one or more STAs 240. The packet preamble 510 can include any combination of fields and subfields for providing signaling information to client devices or STAs 240 in a network packet. Packet preamble 510 can be generated, updated, and managed by packet preamble generator 505. For example, packet preamble 510 can comprise a common field and a plurality of user fields. The common field and the user fields can be configured in various ways. The packet preamble generator 505 can configure or implement the common fields to include or insert into the common fields one or more common field indications 515. For instance, the packet preamble generator 505 can include or insert into the common field one or more basic service sets (BSS) colors that are associated with the first AP 205 or the second AP 205 that are configured to participate in coordinated beamforming (CBF) communication of the network packet. The packet preamble generator 505 can configure or implement the user fields of the preamble to include user field indications 525. For instance, the plurality of user fields of the packet preamble 510 can include a signaling user field and user fields corresponding to client devices of the first AP 205 or a second AP 205. For instance, the packet preamble 510 can include one or more BSS colors associated with the first AP 205 and the second AP 205, which can be inserted into a common field of the preamble.

The packet preamble 510 can be utilized by a first AP 205 and a second AP 205 that are configured for participating in CBF communication of the network packet to send indications or signals to the STAs 240 to facilitate or trigger the CBF communication at the STA 240 side. The packet preamble 510 can include an indication to associate each of the user fields associated with the client devices with the one or more BSS colors. The packet preamble 510 can include one or more identifiers of the STAs 240 and can be transmitted to the plurality of STAs 240 to cause the particular recipient STA 240 of the plurality of STAs 240 to process the network packet for CBF communication responsive to the one or more identifiers and according to the indication (e.g., within the error correction coding subfield).

Common field indication 515 can include any type and form of signaling information inserted into the common field of a packet preamble 510. Common field indication 515 can be used to signal various parameters and configurations for CBF communication. For example, common field indication 515 can include one or more BSS colors associated with the first AP and the second AP 205, which can be configured to participate in CBF communication of the network packet. Common field indication 515 can include an indication of a number of user fields associated with a CBF resource unit (RU). The common field indication 515 can signal a single CBF BSS color corresponding to the pair or group of participating APs and convey a specific sequence or ordering of the APs, such that one of the APs is designated or assigned as the first AP 205A, and another AP is designated or assigned as the second AP 205B. Each AP of the group of participating APs corresponding to the single BSS color or CBF BSS color can be assigned a unique AP-position to indicate its position in the sequence or ordering of the APs. The single BSS color and the corresponding unique AP-position of each AP in the group can be negotiated between the APs in the group beforehand (prior to generating the preamble). The negotiated single BSS color and the corresponding unique AP-position of an AP can be communicated to participating CBF STAs associated with the AP beforehand (prior to generating the preamble).

User field indications 525 can include any type and form of signaling information inserted into the user fields of a packet preamble 510. User field indications 525 can be used to signal various parameters and configurations for CBF communication. For example, user field indications 525 can include an indication to associate each of the user fields associated with the client devices with the one or more BSS colors, or with one or more AP positions in the sequence or ordering of APs as indicated by a single CBF BSS color. User field indications 525 can also include one or more identifiers of the client devices, such as STA-IDs. Client devices or STAs associated with the same AP can be assigned unique STA-IDs (such that no two STAs associated to the same AP share the same STA-ID). A client device or STA associated with one AP can share the same STA-ID as a second device or STA associated with a different AP. User field indications 525 can include a subfield for indicating error coding, such as a Low-Density Parity Check (LDPC) coding for the CBF communication. User field indications 525 can also include a subfield for indicating a CBF RU size limitation, wherein the CBF RU size limitation is configured to indicate use of LDPC coding for the CBF communication.

Combination codes 530 can include any type and form of signaling information used to indicate the association and order of user fields in a packet preamble 510. Combination codes 530 can be inserted by packet preamble generator 505 into a common field of the packet preamble 510. For example, combination codes 530 can indicate a number of client devices associated with the plurality of user fields of a CBF RU and an order of the user fields. Combination codes 530 can also be selected from a plurality of combination codes signaling a plurality of predefined orders of the plurality of user fields corresponding to the client devices associated with at least one of the first AP or the second AP. The combination codes 530 can signal a designation of at least one of the first AP or the second AP negotiated by the first AP and the second AP prior to generating the preamble.

User field order manager 535 can include any combination of hardware and software for managing, creating or arranging an order of user fields in a packet preamble 510. User field order manager 535 can be used to order the user fields associated with particular STAs 240 based on various parameters and configurations for CBF communication. For example, user field order manager 535 can order the plurality of user fields of the packet preamble 510 into a first subset of user fields associated with a first one of the first AP 205 and the second AP (e.g., the first AP 205) and a second subset of user fields associated with a second one of the first AP and the second AP (e.g., the second AP 205). User field order manager 535 can also indicate the order of the plurality of user fields based on a first BSS color corresponding to the first AP and a second BSS color corresponding to the second AP. The user field order manager 535 can indicate that the plurality of user fields is ordered such that a first one of the first subset of user fields or the second subset of user fields precedes a remaining one of the first subset of user fields or the second subset of user fields.

RU manager 540 can include any combination of hardware and software for managing resource units (RUs) in a network packet for CBF communication. RU manager 540 can be used to allocate and manage RUs based on various parameters and configurations for CBF communication. For example, RU manager 540 can manage the allocation of subcarriers within a channel used for communication between APs and STAs. RU manager 540 can also manage the size of CBF RUs, such as specifying that a CBF RU cannot be smaller than RU-484, indirectly imposing (e.g., triggering) LDPC coding to be used for all the participating APs 205 and STAs 240 because LDPC can be an only supported coding option for RUs of this size or larger. The RU manager 540 can indicate the number of user fields for each CBF RU based on the size of the RU determined by the first AP.

Network 501 can include any combination of wired and wireless communication channels for connecting APs 205 and stations 240. Network 501 can include a wireless local area network (WLAN) for one or more Wi-Fi AP devices (e.g., APs 205) to communicate with one or more STAs 240 via Wi-Fi signals. The network 501 can facilitate the transmission of network packets, including packet preambles, between APs and client devices. For example, network 501 can support the wireless communication between a plurality of APs 205A-N and a plurality of client devices or stations 240A-N. For example, network 501 can support CBF transmissions or CBF communications from two or more participating APs 205A-N to two or more participating STAs 240A-N, comprising one or more participating STAs associated with each participating AP. Network 501 can also support the transmission of packet preambles 510, including common field indications 515, user field indications 525, and combination codes 530, between APs and client devices.

Station 240, also referred to as a client device 240 or a STA 240, can include any combination of hardware and software for transmitting or receiving and processing network packets from APs 205 via network 501. STAs 240 can communicate with other STAs 240 via one or more APs 205 and can apply CBF communications according to CBF configurations or CBF RU data provided via packet preambles 510. Station 240 can be configured to process packet preambles 510, decode user field orders, and decode combination codes for CBF communication. For example, station 240 can include one or more of preamble processors 550 for processing received packet preambles 510, order decoders 555 for decoding the ordering of user fields in the packet preambles 510, or combination decoders 560 for decoding the combination codes 530. Station 240 can also determine the association between the client devices and the APs and any corresponding CBF RU data based on the received packet preambles.

Preamble processor 550 can include any combination of hardware and software for processing received packet preambles 510. Preamble processor 550 can be used to decode and interpret the signaling information in the packet preambles for CBF communication. For example, preamble processor 550 can process the common field and user field indications in the packet preambles to determine the association of user fields (e.g., and their corresponding clients 240) with specific APs 205 and BSS colors. Preamble processor 550 can also process the CBF configuration data in the spatial configuration subfields of the user fields to configure the client device 240 for CBF communication. The preamble processor 550 can process the combination codes 530 in the common field to determine the order of the user fields and the association of client devices with the APs.

Order decoder 555 can include any combination of hardware and software for decoding the ordering of user fields in packet preambles 510. Order decoder 555 can be used to determine the order of user fields based on the signaling information in the packet preambles for CBF communication. For example, order decoder 555 can decode the order of the plurality of user fields based on a first BSS color corresponding to a first AP and a second BSS color corresponding to a second AP, or based on a single BSS color corresponding to a specific ordering of APs. Order decoder 555 can also decode the order of the user fields based on a combination code 530 in the common field, indicating the predefined order of the user fields corresponding to the client devices associated with at least one of the first AP or the second AP. The order decoder 555 can decode the order of the user fields to determine whether the network packet of the preamble is intended for the client device.

Combination decoder 560 can include any combination of hardware and software for decoding combination codes 530 in packet preambles 510. Combination decoder 560 can be used to interpret the combination codes 530 to determine the association and order of user fields for CBF communication. For example, combination decoder 560 can decode the combination codes to identify the number of client devices associated with the plurality of user fields of a CBF RU and the order of the user fields. Combination decoder 560 can also decode the combination codes to determine the association of user fields with specific APs and BSS colors. The combination decoder 560 can decode the combination codes to determine the predefined order of the user fields corresponding to the client devices associated with at least one of the first AP or the second AP.

In the context of 802.11, a CBF transmission can include two or more APs 205 concurrently transmitting a CBF PPDU to their respective STAs 240. The CBF PPDU can be a data packet that is transmitted between two or more APs 205 and their STAs 240. The CBF transmission can be similar to a downlink Multi-User Multiple Input Multiple Output (MUMIMO) PPDU such that a CBF PPDU can include a plurality of spatial streams of which a subset of the spatial streams is intended for each STA 240. The preamble of a CBF PPDU may not be beamformed, causing a plurality of challenges such as synchronization problems, increased channel estimation errors, increased interference, and reduced signal quality. In this manner, the preamble of the CBF PPDU can carry information for all the APs' 205 addressed STAs 240, as needed by each STA to decode a respective spatial stream(s).

The preamble of the CBF PPDU can be similar to a downlink MUMIMO or orthogonal frequency division multiple access (OFDMA) preamble. The preamble of the CBF PPDU can include a common field and at least one user field. The common field can include information (e.g., symbols) associated with each STA 240 in range of the at least one AP 205 (e.g., UHR common field). The common field can include one or more bits in accordance with the Wi-Fi standard (e.g., IEEE 802.11). The common field can consist of a synchronization sequence, training fields, signal fields, and pilot signals. The at least one user field can include information associated with specific STAs 240 (e.g., UHR user-field). For example, a first user-field can be associated with a first STA 240A while a second user field can be associated with a second STA 240B.

In at least one technical solution described herein, the common field can include at least two BSS color fields. The second BSS color field can include 6 bits to match a first BSS color field. The first BSS color field can signal or indicate the BSS color used by one participating AP 205 for non-CBF transmissions. The second BSS color field can signal or indicate the BSS color used by another participating AP 205 for non-CBF transmissions. The user-field can include an indication (e.g., one bit) of the BSS color, or the AP that is associated with the STA 240. In some instances, the user-field can be indicated via the Reserved bit sub-field (e.g., 1 bit) in a format similar to the MU-MIMO user-field format. For an AP 205 to communicate with a respective STA 240, the user-field can include STA-IDs that are assigned by each AP 205. The STA-ID can correspond to a respective STA 240 of the AP 205. In some instances, the STA-IDs assigned by one AP 205 can overlap with STA-IDs assigned by another AP 205 (e.g., the same STA-ID can be assigned by either AP to one of its STAs 240).

In at least one of the technical solutions described herein, the common field can include one BSS color field (e.g., 6 bits). Within the common field, the APs 205 can signal or indicate a CBF BSS color for the CBF transmission. The BSS color for the CBF transmissions can be different from the BSS color that is used by an AP for non-CBF transmissions. The user-field can include an indication of the STA-ID. The STA-ID for an intended STA 240 in the CBF transmission can be different from the STA-ID for the same STA in non-CBF transmissions. The STA-ID space corresponding to a particular CBF BSS color can be split between the participating APs (without overlap) 205 (e.g., a MSB value of 0 can map to one AP and an MSB value of 1 can map to the other AP). The CBF BSS color and the STA-ID sharing can be pre-negotiated between the participating APs 205.

In at least one of the technical solutions described herein, the common field can include one BSS color field (e.g., 6 bits). Within the common field, the APs 205 can signal or indicate a CBF BSS color for the CBF transmission. The one BSS color or CBF BSS color for the CBF transmissions can be different from the BSS color that is used by the AP 205 for non-CBF transmissions. The CBF BSS color can correspond to a pre-negotiated ordering or sequence of APs 205 participating in the CBF transmission. For instance, the CBF BSS color can denote or indicate that one of the participating APs is the first AP 205A in the CBF transmission, and another participating AP is the second AP 205B in the CBF transmission, and so on. For example, the CBF BSS color can correspond to a specific assignment of AP-positions to the participating APs. The user-field can include an indication (e.g., user-field indications 525) of the STA-ID. The STA-ID for an intended STA 240 in the CBF transmission can be identical to the STA-ID for the same STA in non-CBF transmissions. The STA-ID space corresponding to a particular CBF BSS color can be shared or reused between the participating APs (with overlap) 205 (e.g., a STA 240 associated with the first AP in the CBF transmission can have the same STA ID as a STA 240 associated with the second AP in the CBF transmission). The user-field indications 525 can indicate the AP-position (e.g., the first AP or the second AP in the sequence of participating APs signified by the CBF BSS color) with which the intended STA 240 of the user-field is associated. In some instances, such as when there are two participating APs, the AP-position corresponding to the user-field can be indicated via the Reserved bit sub-field (e.g., 1 bit) or the Coding-bit sub-field of the user-field, in a format similar to the MU-MIMO user-field format. The CBF BSS color and the associated sequence or ordering of APs and their AP-positions can be pre-negotiated between the participating APs 205, and communicated by the participating APs 205 to their associated STAs 240.

The AP 205 can indicate that a low density parity check (LDPC) is the only supported coding option for the CBF. The LDPC can refer to an error correction code that detects and corrects error during data transmissions within the network 501 between the APs 205 or the AP 205 and a STA 240. The common field indications 515 of the preamble 510 in the CBF transmission can indicate or signal which APs 205 are participating in the CBF transmission based on prior specification/negotiation between APs 205 and STAs 240. The packet preamble generator 505 can indicate, generate, or otherwise signal two BSS colors (e.g., BSS-color 1 and BSS color 2) for each participating AP 205 (e.g., corresponding to its non-BSS color in the non CBF transmission) or a single CBF BSS color corresponding to the pair of participating APs 205. The single CBF BSS color can indicate a specific ordering of the APs 205 (e.g., one of the APs can be designated as the first AP 205, and the other AP 205 can be designated as the second AP (e.g., as negotiated/conveyed beforehand)). The common field indications 515 of the preamble 510 can indicate a number of user fields associated with each CBF RU.

The user field indications 525 can indicate a plurality of STA-IDs which overlap across the APs 205. For example, the first STA-ID can correspond to a first AP 205 and a second AP 205. In this manner, the first STA-ID can be within range of the first AP 205 and the second AP 205. The user field indication 525 can include coding subfields. The coding subfield can signal or indicate whether the user field is associated with BSS-color1 or BSS-color2. Alternatively, the coding subfield can signal or indicate whether the user field is associated with the first AP (i.e., AP-position 1) or the second AP (i.e., AP-position 2) of the CBF BSS color. BSS-color2 can be included when more than one BSS-color is signaled within the common field. For example, a value of 0 can signal that the user-field is associated with the BSS-color1, or the first AP of the CBF BSS color. In another example, a value of 1 can signal that the user-field is associated with the BSS-color2, or the second AP of the CBF BSS color.

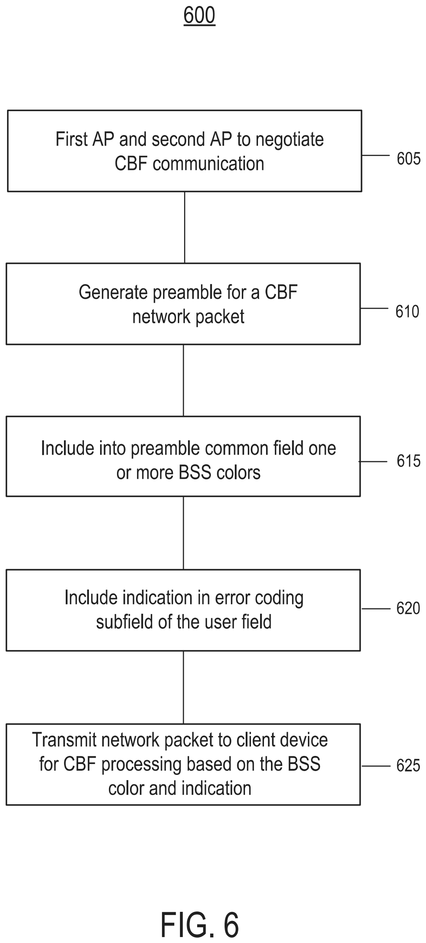

Referring now to FIG. 6 an example method 600 of providing preamble signaling for multi-AP CBF communications via error correction coding subfields is illustrated. Method 600 can be implemented, for example, using one or more processors of a computing system configured via instructions and data stored in memory, to implement a configuration or synchronization of CBF operation among the participating devices (e.g., access points (APs) and stations (STAs 240)). The method 600 can be implemented, using for example, system 200, system 500, or any of the features discussed in connection with FIGS. 1A-5. Method 600 can include acts 605-625. At 605, the first AP and the second AP can negotiate a CBF transmission. At 610, the method can include a first AP generating a preamble for a CBF network packet. At 615, the method can include the first AP including or inserting one or more BSS colors in the preamble of a common field. At 620, the method can include the first AP including or inserting an indication in an error coding subfield of the user field. At 625, the method can include the first AP transmitting the network packet to client devices to process based on the BSS color and the indication.

At 605, the method can include the first AP and the second AP negotiating a CBF communication. In negotiation, the APs 205 can perform channel sounding to measure a channel state information (CSI) by estimating channel conditions based on pilot signals communicated between both APs. Using the CSI, the APs 205 can coordinate schedules and beamforming vectors. In some instances, the APs 205 can align antennas to coordinate beamforming vectors. The APs 205 can establish an order based on the agreed schedule to initiate the CBF transmission.

During the negotiation, the first AP and the second AP can establish an identifier for the first AP. In some instances, the first AP and the second AP can establish the identifier for a first BSS color of the one or more BSS colors for the first AP. In some instances, the first AP and the second AP can establish an identifier for the second AP. In some instances, the first AP and the second AP can establish the identifier for the second BSS color of the one or more BSS colors for the second AP. In some instances, the first AP and the second AP can establish a single or CBF BSS color for CBF transmissions, and further establish, corresponding to the CBF BSS color, an ordering or sequence of the APs or an assignment of AP-positions to the APs. The first AP and the second AP can communicate the negotiated CBF BSS color and corresponding ordering/sequence/AP-positions to their respective associated STAs.

At 610, the method can include a first AP generating a preamble of a CBF network packet, for a CBF transmission. The first AP can generate the preamble for the network packet of a wireless local area network (WLAN). The preamble generator 505 of the AP 205 can generate the preamble such that it includes a common field and one or more user fields. A user field can be associated with a client device (e.g., station 240 or STA 240) of a plurality of client devices of the first AP and the second AP that are intended recipients of the CBF transmission. The common field indication can signal or indicate the APs 205 that are participating in the CBF transmission. The common field can signal or indicate one or more RUs of the CBF network packet as CBF RUs. The common field can include one or more fields (e.g., indications) that are indicative of a number of user fields corresponding to a number of the plurality of client devices for whom the CBF transmission in each CBF RU is intended.

The user field can indicate the specific STA-IDs of the STAs 240 which can overlap across APs. The preamble can include an error-correction coding subfield within the user field that can be used to indicate with which AP or BSS color the user field of a CBF resource unit (RU) is associated. The AP can determine the number of user fields based on a characteristic (e.g., a size) of the RU. In some instance, the AP can determine the number of subfields based on the size of the RU. The subfield of the user field can include a signal (e.g., a single-bit signal) to distinguish whether the user-field is intended for a STA 240 associated with the first AP or with the second AP. The CBF RU size can vary, depending on the configuration. The CBF RU size limitation can be configured to indicate use of a Low-Density Parity Check (LDPC) coding for the CBF communication.

At 615, the method can include the first AP including or inserting the one or more BSS colors within the common field of the preamble. The one or more BSS colors can identify the participating APs in the CBF communication. Each of the BSS colors can be associated with the first AP and the second AP. For example, the one or more BSS colors include a first BSS color associated with the first AP and a second BSS color associated with the second AP. The first AP and the second AP can participate in the CBF communication of the network packet based on the one or more BSS colors. In some instances, the BSS colors of both APs can be inserted in the common field of the preamble, for example in a first BSS-color-subfield and a second BSS-color-subfield within the common field. The participating APs can pre-negotiate which BSS color is inserted in each BSS-color-subfield. For example, the first BSS color (associated with the first AP) can be inserted in the first BSS-color-subfield, and the second BSS color (associated with the second AP) can be inserted in the second BSS-color-subfield. Alternatively, the second BSS color can be inserted in the first BSS-color-subfield, and the first BSS color can be inserted as the second BSS-color-subfield. In some instances, a single BSS color or CBF BSS color can be inserted in the common field of the preamble. The CBF BSS color can correspond to a pair of APs (e.g., first AP and the second AP)and an ordering of the pair of APs in the CBF transmission. The ordering can configure each AP to participate in the CBF communication of the network packet. The ordering can comprise an AP-position assigned to each AP of the pair of APs, for example a first AP-position assigned to one AP of the pair of APs and a second AP-position assigned to the other AP of the pair of APs. The CBF BSS color and the corresponding ordering or AP-positions can be pre-negotiated between the pair of APs.

At 620, the method can include the first AP including or inserting an indication in an error coding subfield of the user field. The indication can be a CBF indication that represents one bit within the user field. The indication can be an association of the user field with the first AP or the second AP. The association can be based on the one or more BSS colors. For example, the indication can be an association of the user field with one of the first or the second BSS-color-subfields in the common field, thereby associating the user-field with the AP whose BSS color is inserted in that BSS-color-subfield. For example, the indication can associate the user field with an AP-position corresponding to the single CBF BSS color inserted in the common field, thereby associating the user-field with the AP assigned that AP-position.

The indication can cause the client device to determine whether the user-field is associated with the first AP based on the first BSS color or the second AP based on the second BSS color. The user field can include a plurality of values (e.g., indications) that correspond to the BSS color. For example, a value of 0 in the user field can indicate that the user field is associated with the BSS color inserted in the first BSS-color-subfield. In another example, a value of 1 in the user field can indicate that the user field is associated with the BSS color inserted in the second BSS-color-subfield. In some instances, the indication can cause the client device can distinguish between the first AP and the second AP according to the indication including the single BSS color or CBF BSS color. To distinguish between the first AP and the second AP, the client device can extract the ordering such as AP-position from the indication.

The AP can configure the one or more BSS colors of the common field to trigger or cause the client device to determine the error correction coding for the network packet is a low-density parity check (LDPC) error correction coding. The preamble can include header information that is read by client device to identify a coding scheme associated with the LDPC error correction coding according to a respective standard. Based on the identification, the client device can decode the LDPC codes or determine the error correction coding.

At 625, the method can include the first AP transmitting the network packet to client devices to process the network packet based on the order or sequence of APs participating in the CBF transmission indicated by the BSS color and the indication. In transmission, the first AP and the second AP can simultaneously transmit the network packet (including the preamble) to the plurality of client devices. Each client device can receive the network packet and extract the preamble from the network packet. Extracting the preamble can cause the client device to detect or obtain the indication from within the user field indication and the one or more BSS colors from within the common field indication of the preamble. By obtaining the indication, the indication can cause the client device to determine whether the network packet is intended for this client device. The determination can indicate that the network packet is intended for the client device. The client device can determine that the network packet is intended for the client device using at least one of the BSS colors, the user-field indications, or the STA-ID. For example, the client device can verify the BSS colors of the network packet to determine that the network packet is intended for the client device. In another example, the client device can verify the BSS colors and the STA-IDs associated with the network packet to determine that the network packet is intended for the client device. Based on the determination, the indication can cause the client device to process the network packet according to the CBF communication.

Some of the description herein emphasizes the structural independence of the aspects of the system components or groupings of operations and responsibilities of these system components. Other groupings that execute similar overall operations are within the scope of the present application. Modules can be implemented in hardware or as computer instructions on a non-transient computer readable storage medium, and modules can be distributed across various hardware or computer-based components.

The systems described above can provide multiple ones of any or each of those components and these components can be provided on either a standalone system or on multiple instantiation in a distributed system. In addition, the systems and methods described above can be provided as one or more computer-readable programs or executable instructions embodied on or in one or more articles of manufacture. The article of manufacture can be cloud storage, a hard disk, a CD-ROM, a flash memory card, a PROM, a RAM, a ROM, or a magnetic tape. In general, the computer-readable programs can be implemented in any programming language, such as LISP, PERL, C, C++, C#, PROLOG, or in any byte code language such as JAVA. The software programs or executable instructions can be stored on or in one or more articles of manufacture as object code.

The subject matter and the operations described in this specification can be implemented in digital electronic circuitry, or in computer software, firmware, or hardware, including the structures described in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage). The operations described in this specification can be implemented as operations performed by a data processing apparatus on data stored on one or more computer-readable storage devices or received from other sources.

The terms "computing device", "component" or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data can include non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order. Having now described some illustrative implementations, it is apparent that the foregoing is illustrative and not limiting, having been presented by way of example. In particular, although many of the examples presented herein involve specific combinations of method acts or system elements, those acts and those elements may be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently described systems or methods, their components, acts, or elements to single or plural configurations. References to any act or element being based on any information, act or element may include implementations where the act or element is based at least in part on any information, act, or element.

Any implementation described herein may be combined with any other implementation or embodiment, and references to "an implementation," "some implementations," "one implementation" or the like are not necessarily mutually exclusive and are intended to indicate that a particular feature, structure, or characteristic described in connection with the implementation may be included in at least one implementation or embodiment. Such terms as used herein are not necessarily all referring to the same implementation. Any implementation may be combined with any other implementation, inclusively or exclusively, in any manner consistent with the aspects and implementations described herein.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements. Modifications of described elements and acts such as substitutions, changes and omissions can be made in the design, operating conditions and arrangement of the described elements and operations without departing from the scope of the technical solutions described herein.

References to "approximately," "substantially", or other terms of degree include variations of +/-10% from the given measurement, unit, or range unless explicitly indicated otherwise. Coupled elements can be electrically, mechanically, or physically coupled with one another directly or with intervening elements. Scope of the Systems and methods described herein is thus indicated by the appended claims, rather than the foregoing description, and changes that come within the meaning and range of equivalency of the claims are embraced therein.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A system, comprising:
a first access point (AP) configured to:
generate a preamble for a network packet of a wireless local area network (WLAN), the preamble comprising a common field and a user field associated with a client device of a plurality of client devices of the first AP and a second AP;
include, into the common field of the preamble, one or more basic service sets (BSS) colors associated with the first AP and the second AP, the first AP and the second AP configured to participate in coordinated beamforming (CBF) communication of the network packet;
include, into a subfield of the user field for indicating error correction coding, an indication of association of the user field associated with the client device with the first AP or the second AP based on the one or more BSS colors; and
transmit, to the client device, the network packet to be processed by the client device for CBF communication of the network packet according to the one or more BSS colors and the indication.

2. The system of claim 1, wherein
the first AP and the second AP are configured to simultaneously transmit the preamble to the plurality of client devices comprising the client device and wherein the indication from the subfield is configured for use by the client device to determine whether the network packet of the preamble is intended for the client device.

3. The system of claim 1 or 2, wherein
the one or more BSS colors include a first BSS color associated with the first AP and a second BSS color associated with the second AP and wherein
the subfield of the user field for indicating error correction coding is used for indicating error correction coding in non-CBF multiple user multiple input and multiple output (MUMIMO) communication.

4. The system of claim 3, wherein
the indication is configured to cause the client device to determine whether the user field associated with at least one of the client device or a second client device of the plurality of client devices is associated with the first AP based on the first BSS color or the second AP based on the second BSS color.

5. The system of any one of the claims 1 to 4, wherein
the indication is configured to cause the client device to process the network packet according to the CBF communication in response to determining that the network packet is intended for the client device based on the indication.

6. The system of any one of the claims 1 to 5, wherein
the one or more BSS colors comprise a single BSS color corresponding to the first AP and the second AP.

7. The system of claim 6, wherein
the single BSS color is associated with an ordering of the first AP and second AP according to a first AP position and a second AP position, and the indication in the user field is configured to cause the client device to determine whether the user field is associated with the first AP position or the second AP position responsive to the single BSS color.

8. The system of any one of the claims 1 to 7, wherein
the one or more BSS colors of the common field are configured to trigger the client device to determine that error correction coding for the network packet is a low-density parity check (LDPC) error correction coding.

9. The system of any one of the claims 1 to 8, wherein
the common field further comprises a second indication indicative of a number of user fields corresponding to a number of the plurality of client devices comprising the client device.

10. The system of any one of the claims 1 to 9, wherein
the first AP is configured to negotiate with the second AP, prior to the generation of the preamble, ordering of the first AP and the second AP in the CBF communication;
wherein in particular
the negotiation between the first AP and the second AP includes establishing an identifier for the first AP or a first BSS color of the one or more BSS colors for the first AP and an identifier for the second AP or a second BSS color of the one or more BSS colors for the second AP.

11. The system of any one of the claims 1 to 10, wherein
the preamble indicates a CBF Resource Unit (RU) , wherein the CBF RU is configured to indicate use of a Low-Density Parity Check (LDPC) coding as the error correction coding for the CBF communication.

12. The system of any one of the claims 1 to 11, wherein
the subfield of the user field includes a single bit signal to distinguish between the first AP or the second AP.

13. The system of any one of the claims 1 to 12, wherein
the common field is configured to indicate to the client device a number of user fields associated with a CBF Resource Unit (RU).

14. A method, comprising:
generating, by one or more processors of a first access point (AP) coupled with memory, a preamble for a network packet of a wireless local area network (WLAN), the preamble comprising a common field and a user field associated with a client device of a plurality of client devices of the first AP and a second AP;
including, by the one or more processors, into the common field of the preamble, one or more basic service sets (BSS) colors associated with the first AP and the second AP, the first AP and the second AP configured to participate in coordinated beamforming (CBF) communication of the network packet;
including, by the one or more processors, into a subfield of the user field for indicating error correction coding, an indication of association of the user field associated with the client device with the first AP or the second AP based on the one or more BSS colors; and
transmitting, by the one or more processors to the client device, the network packet to be processed by the client device for CBF communication of the network packet according to the one or more BSS colors and the indication.

15. A non-transitory computer readable medium storing instructions that when executed by one or more processors of a first access point (AP) cause the one or more processors of the first AP to control and/or carry out a method as set forth in the preceding claim.
